# EUROPÄISCHE PATENTSCHRIFT

(11) **EP 0 940 295 B1**
(45) Veröffentlichungstag und Bekanntmachung des Hinweises auf die Patenterteilung: **30.07.2003**
(21) Anmeldenummer: 99103733.4
(22) Anmeldetag: 26.02.1999
(51) Int. Cl.: B60R 16/02, B60K 37/06

(54) **Bedienvorrichtung mit einer einen Bildschirm aufweisenden Anzeigeeinheit**
Operating device with an indicating unit comprising a video display
Dispositif de commande avec une unité d'indication comprenant un écran

(30) Priorität: 02.03.1998 DE 19808464
(43) Veröffentlichungstag der Anmeldung: 08.09.1999
(73) Patentinhaber: Siemens Aktiengesellschaft, 80333 München (DE)
(72) Erfinder: May, Norbert, 64832 Babenhausen (DE)

(56) Entgegenhaltungen:
- EP-A- 0 274 879
- EP-A- 0 816 155
- DE-A- 3 836 555
- DE-A- 3 842 414
- DE-A- 19 610 700
- DE-C- 3 514 438

## Beschreibung

Die Erfindung betrifft eine Bedienvorrichtung, für ein Fahrzeug, gemäß dem Oberbegrifft von Anspruch 1 Derartige Bedienvorrichtungen sind bekannt z.B. DE 3 842 414 und werden z. B. in Kraftfahrzeugen zur Bedienung verschiedener Geräte wie Navigationseinrichtungen oder Radios verwendet. Die Bedienung der Geräte erfolgt dabei mittels an dem jeweiligen Gerät angeordneten Stellelementen wie asten und/oder Dreh- und Schiebereglern. Für jedes Gerät ist dabei eine Mehrzahl von Stellelementen notwendig, was sowohl zu einer großen Anzahl und einer damit verbundenen Unübersichtlichkeit der Stellelemente in dem Kraftfahrzeug als auch zu sehr kleinen Abmessungen der Stellelemente führt. Daher ist es bekannt, zur Verringerung der Anzahl der Stellelemente in der jeweiligen Bedienvorrichtung ein Display vorzusehen, auf dem verschiedene Menüstrukturen darstellbar sind, über die jeweils einzelne Funktionen der Geräte anwählbar sind. Dennoch führt eine Vielfalt von Geräten und eine hohe Anzahl der Funktionen jedes einzelnen Geräts zu einer Unübersichtlichkeit der Stellelemente und damit zu einem erhöhten Bedienungsaufwand für einen Fahrzeugführer. Der Fahrzeugführer wird in erheblichem Maß von dem Verkehrsgeschehen abgelenkt, da die Bedienung der einzelnen Geräte ein erhöhtes Maß an Aufmerksamkeit verlangt.

Der Erfindung liegt die Aufgabe zugrunde, eine Bedienvorrichtung mit einer einen Bildschirm aufweisenden Anzeigeeinheit zu schaffen, die sowohl eine einfache Bedienbarkeit unterschiedlicher ansteuerbarer Geräte als auch eine leichte Erfaßbarkeit einer auf dem Bildschirm dargestellten Anzeige gewährleistet.

Diese Aufgabe wird erfindungsgemäß durch die Merkemale des Anspruchs 1 gelöst.

Gemäß einer vorteilhaften Weiterbildung der Erfindung ist die Bedienung besonders einfach, wenn das Bedienelement zur Umschaltung der Menüs wenigstens zwei Tasten oder eine Tastenwippe aufweist. Die Umschaltung kann dabei durch ein einfaches Antippen einer Taste bewirkt werden oder auch dadurch, daß eine Taste so lange gedrückt wird, bis ein neues Menü vollständig auf dem Bildschirm dargestellt ist. Vorzugsweise sind dazu die Menüs in einer festen Abfolge gespeichert, die mit den Tasten in einer Ab- und Aufwärtsrichtung durchlaufen werden kann. Jeweils einer Taste bzw. einer Seite der Tastenwippe ist dabei die Aufwärtsbewegung und der jeweils anderen Taste bzw. anderen Seite der Tastenwippe die Abwärtsbewegung zugeordnet.

Einer anderen vorteilhaften Weiterbildung der Erfindung zufolge ist das Bedienelement zur Umschaltung der Menüs ein Drehknopf. Dadurch ist das Bedienelement blind zu bedienen, da nur ein einziges Stellelement betätigt werden muß. Von besonderem Vorteil ist es, wenn der Drehknopf in einer ersten Drehrichtung und in einer zweiten, der ersten entgegengesetzten Drehrichtung betätigbar ist. Hierbei kann in jeweils einer Drehrichtung eine festgelegte Abfolge der Menüs in einer ersten Richtung bzw. einer zweiten Richtung (z. B. abwärts/aufwärts) durchlaufen werden. Dabei ist es sowohl vorstellbar, daß der Drehknopf in jeder Drehrichtung ohne Anschlag drehbar ist als auch, daß in jeder Drehrichtung nur eine Verdrehung um einen bestimmten Winkel, z. B. 30°, bis zu einem Anschlag ermöglicht ist.

Wenn gemäß einer weiteren vorteilhaften Ausgestaltung der Erfindung der Bildschirm im wesentlichen rechteckig ist und ein Breiten-Höhen-Verhältnis von in etwa 16 : 9 aufweist, dann sind Darstellungen auf dem Bildschirm besonders gut ablesbar, da diese, die Horizontale betonende Bildschirmgeometrie den menschlichen Sehgewohnheiten und -möglichkeiten weitestgehend entgegenkommt.

Von besonderem Vorteil ist es, wenn mit der Bedienvorrichtung ein Radiogerät und/oder ein Navigationssystem und/oder eine Telekommunikationseinrichtung und/oder ein Fahrzeuginformationssystem ansteuerbar ist. Jede dieser Einrichtungen und Systeme hat eine Vielzahl von Eingabe- und Stellmöglichkeiten, so daß durch eine Bedienung mit einer erfindungsgemäßen Vorrichtung eine erhebliche Handhabungsvereinfachung eintritt.

Besonders einfach und kostengünstig zu fertigen ist eine Bedienvorrichtung gemäß der Erfindung, wenn der Bildschirm ein Flüssig-Kristall-Display ist. Flüssig-Kristall-Displays sind in großer Anzahl mit gleichbleibender Qualität preisgünstig herstellbar, weisen ein geringes Gewicht auf und beanspruchen einen nur geringen Einbauraum. Durch diese Vorteile sind sie besonders für den Einsatz in Kraftfahrzeugen geeignet. Insbesondere für eine farbige Darstellung von Anzeigen ist es aber auch vorteilhaft, wenn der Bildschirm eine Kathodenstrahlröhre aufweist oder ein Vakuum-Fluoreszenz-Display ist.

Die Übersichtlichkeit der Bedienvorrichtung kann vorzugsweise dadurch weiter gesteigert werden, daß der Bildschirm zwei Teilbereiche aufweist, wobei in dem einen Teilbereich die ansteuerbaren Menüs wahlweise und in dem anderen Teilbereich der Wert einer veränderlichen Größe und/oder ein vorgegebenes Menü darstellbar ist. Auf diese Weise kann in dem zweiten Bildschirm-Teilbereich dem Bediener ständig ein festgelegtes Menü angeboten werden oder z. B. eine zurückgelegte Wegstrecke oder eine Fahrgeschwindigkeit angezeigt werden. Das ist insbesondere dann von Vorteil, wenn die Anzeigeeinheit der Bedienvorrichtung in einem Kombinationsinstrument eines Fahrzeugs angeordnet ist.

Die Ansteuerbarkeit der auf dem Bildschirm darstellbaren Menüs ist besonders einfach, wenn das Eingabeelement zum Ansteuern der Menüs vorzugsweise wenigstens zwei Tasten aufweist oder eine Tastenwippe ist. Üblicherweise sind die Menüpunkte in einer festen Abfolge geordnet; ist dann jeder der Tasten bzw. jeder Seite der Tastenwippe eine Durchlaufrichtung durch das jeweilige Menü zugeordnet, so lassen sich auf diese Weise leicht die einzelnen Menüpunkte anwählen. Besonders vorteilhaft ist es, wenn das Eingabeelement zum Ansteuern der Menüs ein Drehsteller oder ein Dreh-Drück-Steller ist. Damit ist lediglich ein einziges Stellelement erforderlich, um einzelne Menüpunkte anzuwählen. Vorteilhaft kann die zusätzliche Drückfunktion eines Dreh-Drück-Stellers dazu benutzt werden, einen durch Drehen angewählten Menüpunkt auszuwählen bzw. eine dem Menüpunkt entsprechende Funktion zu aktivieren. Vorzugsweise ist der Drehsteller oder Dreh-Drück-Steller ein haptischer Steller, wodurch - angepaßt an das jeweils dargestellt Menü - eine gefühlsmäßige Rückmeldung (z. B. durch Raststufen) an einen Bediener erfolgt.

Besonders gering ist die Anzahl der Stellelemente der Bedienvorrichtung, wenn gemäß einer anderen vorteilhaften Weiterbildung der Erfindung der Bildschirm ein Touch Panel aufweist und wenn das Touch Panel das Eingabeelement zum Ansteuern der Menüs und/oder das Bedienelement zum Umschalten der Menüs aufweist.

Bei dem Touch Panel sind in einfacher Weise auf dem Bildschirm Flächenbereiche vorgesehen, bei deren Berührung eine dem jeweiligen Flächenbereich zugeordnete Funktion ausgeführt wird.

Man könnte sich vorstellen, daß das erste Menü bei einer Umschaltung zu dem zweiten Menü mit einer gleichmäßigen Geschwindigkeit abgebaut und parallel dazu das zweite Menü aufgebaut wird. Es ist jedoch von besonderem Vorteil für eine einfache Bedienung, wenn die Geschwindigkeit des sukzessiven Abbaus des ersten Menüs und des sukzessiven Aufbaus des zweiten Menüs während der Umschaltung ansteigt. Dadurch wird dem Bediender die Möglichkeit eröffnet, in einem ersten Blick, beim Erscheinen des neuen Menüs, zu erfassen, ob es sich bei diesem um das gewünschte Menü handelt; andernfalls könnte er z. B. die Menüabfolge in entgegengesetzter Richtung durchlaufen. Ist jedoch die Auswahl gefallen, so ist es von Vorteil, wenn durch die ansteigende Geschwindigkeit der Bildwechsel dann schnell erfolgt.

Besonders gut für einen fließenden Übergang von einem Menü zum nächsten bei der Umschaltung ist es, wenn der Bildschirm eine Matrix darstellbarer Bildpunkte aufweist und wenn jeder der Bildpunkte einzeln ansteuerbar ist. Auf diese Weise ist ein besonders weicher Übergang von der Darstellung des einen Menüs zur Darstellung des nachfolgenden Menüs möglich.

Es wäre denkbar, die Menüs bei ihrer Umschaltung von oben nach unten bzw. in umgekehrter Richtung von unten nach oben über den Bildschirm wandern zu lassen. Der Ausrichtung des menschlichen Blickwinkelbereichs und der menschlichen Sehgewohnheiten kommt es jedoch entgegen, wenn gemäß einer vorteilhaften Weiterbildung der Erfindung der Bildschirm in etwa rechteckig ist und wenn das erste Menü bei der Umschaltung zum zweten Menü an einer ersten kurzen Seite des Bildschirms aus diesem herauswandert und wenn das zweite Menü von einer der ersten gegenüberliegenden zweiten kurzen Seite des Bildschirms in diesen hineinwandert. Auf diese Art und Weise findet eine Änderung der Bildschirmdarstellung in der Form eines horizontalen Kameraschwenks über zwei nebeneinander angeordnete Menüs statt. Dabei können die einzelnen Menüs sowohl - z. B. mittels einer Trennlinie - voneinander abgegrenzt sein als auch ohne sichtbare Trennung nacheinander über den Bildschirm laufen.

Eine räumliche Bewegung der Bildschirmdarstellung, die einen Bediener und Betrachter zu einem Nachfolgen der Darstellung und damit einem längeren Verweilen seines Blickes auf der Anzeigeeinheit veranlassen könnte, ist vorteilhaft dann nicht vorhanden, wenn zur Umschaltung vom ersten Menü zum zweiten Menü sukzessive über den Bildschirm verteilt angeordnete Bildpunkte zur Darstellung des zweiten Menüs angesteuert werden. Die nacheinander angesteuerten Bildpunkte können dabei vorzugsweise in etwa zufällig über die Bildschirmfläche verteilt sein oder auch in bestimmten Bereichen, beispielsweise charakteristischen Feldern des Menüs, zu Beginn und am Ende der Umschaltung angehäuft umgesteuert werden. Insbesondere wenn die sukzessive umgesteuerten Bildpunkte in etwa zufällig über den Bildschirm verteilt sind, ergibt sich ein besonders gut erfaßbarer Überblendeffekt. Dabei entsteht für den Betrachter der Eindruck, daß die Darstellung des zweiten Menüs die Darstellung des ersten Menüs aus dem Hintergrund hervortretend überlagert.

Eine erfindungsgemäße Bedienvorrichtung kann als Einheit komplett z. B. in einer Mittelkonsole eines Kraftfahrzeugs angeordnet sein. Zur Verbesserung der Les- und Wahrnehmbarkeit der Anzeigeeinheit kann diese jedoch im direkten Sichtbereich eines Fahrzeugführers, z. B. in einem Fahrzeugkombinationsinstrument, angeordnet sein. Die Eingabe- und Bedienelemente können dabei weiterhin in der Mittelkonsole oder einem anderen Bereich einer Instrumententafel des Fahrzeugs untergebracht sein. Von besonderem Vorteil ist es, wenn Betätigungselemente für eine Luftverteilung und/oder für eine Heizungsanlage und/oder für ein Gebläse und/oder für eine Fahrzeugbeleuchtung in der Bedienvorrichtung vorgesehen sind, so daß die verschiedenen Eingabe-, Bedien- und Betätigungselemente in unmittelbarer Zuordnung zueinander angeordnet sind, wodurch die Wege zwischen diesen Elementen deren Betätigung erleichternd besonders kurz sind.

Die Erfindung läßt zahlreiche Ausführungsformen zu. Zur weiteren Verdeutlichung ihres Grundprinzips ist eine davon anhand eines in der beigefügten Zeichnung dargestellten Ausführungsbeispiels näher erläutert. Diese zeigt in
- Figur 1: eine Bedienvorrichtung gemäß der Erfindung in schematisierter Ansicht,
- Figur 2: einen Bildschirm der Bedienvorrichtung nach Figur 1 mit einer Darstellung eines anderen Menüs und
- Figur 3: den Bildschirm aus Figur 2 während einer Umschaltung der Menüs.

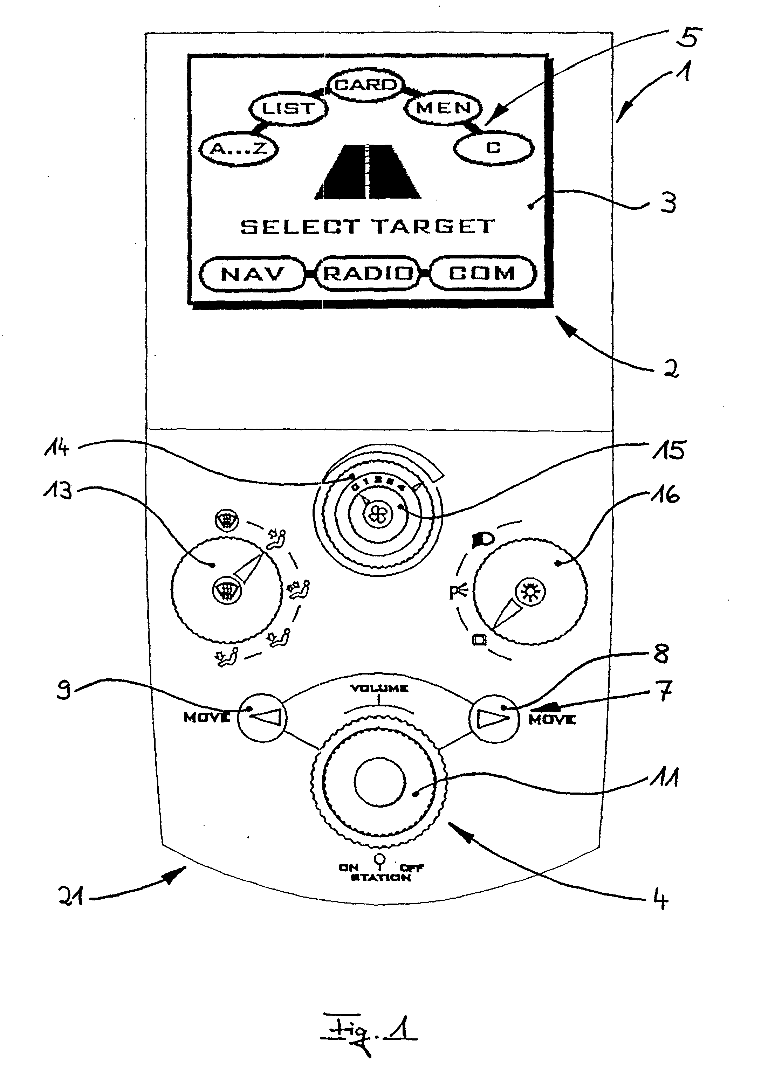

In Figur 1 ist eine Bedienvorrichtung 1 mit einer Anzeigeeinheit 2 und einer Stelleinheit 21 dargestellt. Die Bedienvorrichtung 1 ist in eine hier nicht dargestellte Mittelkonsole eines Cockpits eines Kraftfahrzeugs eingebaut. Es ist aber auch denkbar, die Bedienvorrichtung 1 an einem anderen Ort in dem Cockpit des Kraftfahrzeugs anzuordnen; insbesondere kann auch vorgesehen sein, die Stelleinheit 21 und die Anzeigeeinheit 2 nicht wie dargestellt in unmittelbarer räumlicher Zuordnung zueinander anzuordnen, sondern z. B. die Anzeigeeinheit 2 im primären Blickbereich eines Fahrzeugführers in einem Kombinationsinstrument des Kraftfahrzeuges und die Stelleinheit 21 in dessen Mittelkonsole zu plazieren.

Die Stelleinheit 21 weist ein Betätigungselement 13 für eine Luftverteilung in dem Fahrzeug, ein Betätigungselement 16 für eine Fahrzeugbeleuchtung sowie ein Betätigungselement 15 für ein Gebläse auf, wobei die Betätigungselemente jeweils als Drehschalter ausgebildet sind. In konzentrischer Anordnung zu dem Drehschalter 15 zur Gebläseansteuerung ist ein als Drehregler ausgebildetes Betätigungselement 14 für eine Heizungsanlage angeordnet.

Im unteren Bereich der Stelleinheit 21 ist ein Eingabeelement 4 zur Ansteuerung eines auf einem Bildschirm 3 der Anzeigeeinheit 2 dargestellten Menüs 5 sowie ein Bedienelement 7 zur Umschaltung der Darstellung des Menüs 5 auf eine Darstellung zumindest eines weiteren Menüs vorgesehen. Mit dem Menü 5 ist ein Fahrzeugnavigationssystem ansteuer- und bedienbar. Zur Aus- und Anwahl der einzelnen vorgesehenen Menüpunkte ist das Eingabeelement 4 als Dreh-Drück-Steller 11 ausgebildet; dabei erfolgt eine Auswahl eines Menüpunktes des Menüs 5 durch Drehen des Stellers 11, wobei während des Drehens die Anzahl der zur Verfügung stehenden Menüpunkte bis zum Anhalten des Drehvorgangs durchlaufen wird. Eine Anwahl des auf diese Weise ausgewählten Menüpunktes folgt daraufhin durch Drücken des Stellers 11 in axialer Richtung, was entweder unmittelbar die Ausführung einer Funktion zur Folge hat oder ein hier nicht dargestelltes Untermenü zur Anzeige bringt.

Zur Auswahl eines Menüs aus einer Anzahl von nebengeordneten Menüs einer Ebene, die z. B. jeweils als Hauptmenü der Ansteuerung eines Gerätes wie bspw. einem Fahrzeugnavigationssystem (hier dargestellt), einem Radio, einer Telekommunikationseinrichtung oder einer Klimaanlage dienen können, weist das Bedienelement 7 zwei Tasten 8 und 9 auf. Durch Niederdrücken der ersten Taste 8 oder der zweiten Taste 9 wird das auf dem Bildschirm 3 dargestellte Menü umgeschaltet. Die nebengeordneten Menüs sind in einer vorbestimmten Reihenfolge festgelegt und abrufbar, so daß mit der Betätigung der ersten Taste 8 eine Umschaltung in einer Richtung der Folge und mit der Betätigung der zweiten Taste 9 eine Umschaltung in der entgegengesetzten Richtung der Reihung erfolgt. Auf diese Weise kann jeweils einfach zwischen zwei nebeneinander abgelegten Menüs umgeschaltet werden ohne daß die gesamte Abfolge der Menüs durchlaufen werden müßte.

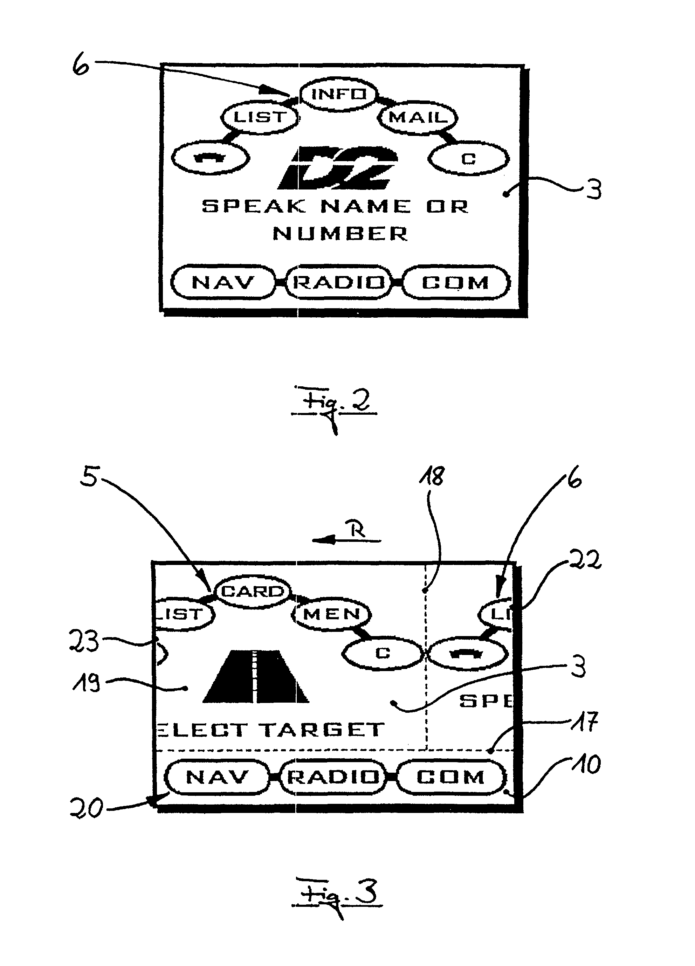

Ein dem Menü 5 nebengeordnetes Menü 6, das zur Bedienung einer Telekommunikationseinrichtung dient, ist auf dem Bildschirm 3 in Figur 2 dargestellt. Der strukturelle Aufbau des Menüs 6 entspricht dem Aufbau des Menüs 5 aus Figur 1. Auch die An- und Auswahl von Menüpunkten erfolgt hier in gleicher Weise wie bei dem in Figur 1 dargestellten Menü 5.

Figur 3 zeigt den Bildschirm aus Figuren 1 und 2 während einer Umschaltung von dem Menü 5 zur Bedienung eines Fahrzeugnavigationssystems zum Menü 6 zur Bedienung einer Telekommunikationseinrichtung. Dabei wandert das in einem oberen Teilbereich 19 des Bildschirms 3 dargestellte Menü 5 aus dem Bildschirm 3 heraus und gleichzeitig das Menü 6 in den oberen Teilbereich 19 des Bildschirms 3 hinein. Es erfolgt dabei eine Bewegung der Bildschirmdarstellung in Richtung des Pfeiles R, so daß das Menü 5 an einer ersten, kurzen Seite 23 den rechteckigen Bildschirm 3 verläßt und sich das Menü 6 an einer der ersten Seite 23 des Bildschirms 3 gegenüberliegenden zweiten Seite 22 des Bildschirms 3 in diesen hineinbewegt. Dabei ist eine Trennlinie 18, die zwischen dem Menü 5 und dem Menü 6 angeordnet ist und sichtbar oder unsichtbar sein kann, in Figur 3 zur Verdeutlichung eingezeichnet. Eine ebenfalls sichtbare oder unsichtbare, hier dargestellte Trennlinie 17 verläuft waagerecht und trennt den oberen Teilbereich 19 des Bildschirms 3, in dem die verschiedenen Menüs darstellbar sind, von einem unteren Teilbereich 10 des Bildschirms 3 ab. In dem unteren Teilbereich 10 des Bildschirms 3 ist ein weiteres Menü 20 dargestellt, das ständig angezeigt wird und das die mit den verschiedenen Menüs steuerbaren Vorrichtungen - in diesem Fall Navigationssystem, Radio und Telekommunikationseinrichtung - aufzeigt. In dem unteren Teilbereich 10 des Bildschirms 3 könnte z. B. aber auch der Wert einer veränderlichen Größe wie z. B. einer Uhrzeit, einer Fahrzeuggeschwindigkeit oder einer zurückgelegten Wegstrecke angezeigt werden.

## Patentansprüche

1. Bedienvorrichtung (1) für ein Fahrzeug mit einer einen Bildschirm (3) aufweisenden Anzeigeeinheit (2) und einem Eingabeelement (4), wobei auf dem Bildschirm mindestens zwei voneinander verschiedene, jeweils mit dem Eingabeelement ansteuerbare Menüs wahlweise darstellbar sind und ein Bedienelement (7) zur Umschaltung zwischen der Darstellung eines ersten Menüs (5) und der Darstellung eines zweiten Menüs (6) vorgesehen ist, **dadurch gekennzeichnet, dass** die Umschaltung zwischen den Menüs (5, 6) nicht schlagartig erfolgt und dass bei der Umschaltung der Menüs (5, 6) die Darstellung des ersten Menüs (5) sukzessive abgebaut und umgekehrt proportional, parallel dazu gleichzeitig die Darstellung des zweiten Menüs (6) sukzessive aufgebaut wird, so dass während des Erscheinens des zweiten Menüs (6) das erste Menü (5) in Teilen noch sichtbar bleibt.

2. Bedienvorrichtung nach Anspruch 1, **dadurch gekennzeichnet, daß** das Bedienelement (7) zur Umschaltung der Menüs (5, 6) wenigstens zwei Tasten (8, 9) oder eine Tastenwippe aufweist.

3. Bedienvorrichtung nach Anspruch 1, **dadurch gekennzeichnet, daß** das Bedienelement (7) zur Umschaltung der Menüs (5, 6) ein Drehknopf ist.

4. Bedienvorrichtung nach Anspruch 3, **dadurch gekennzeichnet, daß** der Drehknopf in einer ersten Drehrichtung und in einer zweiten, der ersten entgegengesetzten Drehrichtung betätigbar ist.

5. Bedienvorrichtung nach einem der vorhergehenden Ansprüche, **dadurch gekennzeichnet, daß** der Bildschirm (3) im wesentlichen rechteckig ist und ein Breiten-Höhen-Verhältnis von in etwa 16:9 aufweist.

6. Bedienvorrichtung nach einem der vorhergehenden Ansprüche, **dadurch gekennzeichnet, daß** mit der Bedienvorrichtung (1) ein Radiogerät und/oder ein Navigationssystem und/oder eine Telekommunikationseinrichtung und/oder ein Fahrzeuginformationssystem ansteuerbar ist.

7. Bedienvorrichtung nach einem der vorhergehenden Ansprüche, **dadurch gekennzeichnet, daß** der Bildschirm (3) ein Flüssig-Kristall-Display ist.

8. Bedienvorrichtung nach einem der Ansprüche 1 bis 6, **dadurch gekennzeichnet, daß** der Bildschirm (3) eine Kathodenstrahlröhre aufweist oder ein Vakuum-Fluoreszenz-Display ist.

9. Bedienvorrichtung nach einem der vorhergehenden Ansprüche, **dadurch gekennzeichnet, daß** der Bildschirm (3) zwei Teilbereiche (10, 19) aufweist, wobei in dem einen Teilbereich (19) die ansteuerbaren Menüs (5, 6) wahlweise und in dem anderen Teilbereich (10) der Wert einer veränderlichen Größe und/oder ein vorgegebenes Menü (20) darstellbar ist.

10. Bedienvorrichtung nach einem der vorhergehenden Ansprüche, **dadurch gekennzeichnet, daß** das Eingabeelement (4) zum Ansteuern der Menüs (5, 6) wenigstens zwei Tasten aufweist oder eine Tastenwippe ist.

11. Bedienvorrichtung nach einem der Ansprüche 1 bis 9, **dadurch gekennzeichnet, daß** das Eingabeelement (4) zum Ansteuern der Menüs (5, 6) ein Drehsteller oder ein Dreh-Drück-Steller (11) ist.

12. Bedienvorrichtung nach Anspruch 11, **dadurch gekennzeichnet, daß** der Drehsteller oder Dreh-Drück-Steller (11) ein haptischer Steller ist.

13. Bedienvorrichtung nach einem der vorhergehenden Ansprüche, **dadurch gekennzeichnet, daß** der Bildschirm (3) ein Touch Panel aufweist und daß das Touch Panel das Eingabeelement (4) zum Ansteuern der Menüs (5, 6) und/oder das Bedienelement (7) zum Umschalten der Menüs (5, 6) aufweist.

14. Bedienvorrichtung nach einem der vorhergehenden Ansprüche, **dadurch gekennzeichnet, daß** die Geschwindigkeit des sukzessiven Abbaus des ersten Menüs (5) und des sukzessiven Aufbaus des zweiten Menüs (6) während der Umschaltung ansteigt.

15. Bedienvorrichtung nach einem der vorhergehenden Ansprüche, **dadurch gekennzeichnet, daß** der Bildschirm (3) eine Matrix darstellbarer Bildpunkte aufweist und daß jeder der Bilc punkte einzeln ansteuerbar ist.

16. Bedienvorrichtung nach einem der vorhergehenden Ansprüche, **dadurch gekennzeichnet, daß** der Bildschirm in etwa rechteckig ist und daß das erste Menü (5) bei der Umschaltung zum zweiten Menü (6) an einer ersten kurzen Seite (23) des Bildschirms (3) aus diesem herauswandert und daß das zweite Menü (6) von einer der ersten gegenüberliegenden zweiten kurzen Seite (22) des Bildschirms (3) in diesen hineinwandert.

17. Bedienvorrichtung nach Anspruch 15 und einem der Ansprüche 1 bis 14, **dadurch gekennzeichnet, daß** zur Umschaltung vom ersten Menü (5) zum zweiten Menü (6) sukzessive über den Bildschirm (3) verteilt angeordnete Bildpunkte zur Darstellung des zweiten Menüs (6) angesteuert werden.

18. Bedienvorrichtung nach einem der vorhergehenden Ansprüche, **dadurch gekennzeichnet, daß** Betätigungselemente (13, 14, 15, 16) für eine Luftverteilung und/oder für eine Heizungsanlage und/oder für ein Gebläse und/oder für eine Fahrzeugbeleuchtung vorgesehen sind.

## Claims

1. Control apparatus (1) for a vehicle having a display unit (2) which features a screen (3) and having an input element (4), where the screen can be used for selectively displaying at least two different menus which can each be actuated with the input element, and a control element (7) is provided for changing over between the display of a first menu (5) and the display of a second menu (6), **characterized in that** changeover between the menus (5, 6) is not abrupt and **in that** changeover between the menus (5, 6) involves progressively clearing the display of the first menu (5) and, conversely, progressively setting up the display of the second menu (6) proportionally and in parallel therewith at the same time, so that parts of the first menu (5) still remain visible while the second menu (6) is appearing.

2. Control apparatus according to Claim 1, **characterized in that** the control element (7) for changing over between the menus (5, 6) has at least two keys (8, 9) or a rocker key.

3. Control apparatus according to Claim 1, **characterized in that** the control element (7) for changing over between the menus (5, 6) is a rotary knob.

4. Control apparatus according to Claim 3, **characterized in that** the rotary knob can be operated in a first direction of rotation and in a second direction of rotation which is opposed to the first.

5. Control apparatus according to one of the preceding claims, **characterized in that** the screen (3) is essentially rectangular and has a width-height ratio of approximately 16:9.

6. Control apparatus according to one of the preceding claims, **characterized in that** the control apparatus (1) can be used to actuate a radio set and/or a navigation system and/or a telecommunication device and/or a vehicle information system.

7. Control apparatus according to one of the preceding claims, **characterized in that** the screen (3) is a liquid crystal display.

8. Control apparatus according to one of Claims 1 to 6, **characterized in that** the screen (3) has a cathode ray tube or is a vacuum fluorescent display.

9. Control apparatus according to one of the preceding claims, **characterized in that** the screen (3) has two subregions (10, 19), with one subregion (19) being able to show the actuatable menus (5, 6) selectively and the other subregion (10) being able to show the value of a variable magnitude and/or a prescribed menu (20).

10. Control apparatus according to one of the preceding claims, **characterized in that** the input element (4) for actuating the menus (5, 6) has at least two keys or is a rocker key.

11. Control apparatus according to one of Claims 1 to 9, **characterized in that** the input element (4) for actuating the menus (5, 6) is a rotary control or a rotary-push control (11).

12. Control apparatus according to Claim 11,
**characterized in that** the rotary control or rotary-push control (11) is a haptic control.

13. Control apparatus according to one of the preceding claims, **characterized in that** the screen (3) features a touch panel and **in that** the touch panel features the input element (4) for actuating the menus (5, 6) and/or the control element (7) for changing over between the menus (5, 6).

14. Control apparatus according to one of the preceding claims, **characterized in that** the speed of progressive clearance of the first menu (5) and of progressive set-up of the second menu (6) increases during changeover.

15. Control apparatus according to one of the preceding claims, **characterized in that** the screen (3) features a matrix of displayable pixels and **in that** each of the pixels can be actuated individually.

16. Control apparatus according to one of the preceding claims, **characterized in that** the screen is approximately rectangular and **in that**, during changeover to the second menu (6), the first menu (5) migrates off the screen (3) on one first short side (23) of the screen (3) and **in that** the second menu (6) migrates onto the screen (3) from a second short side (22) of the screen (3), which is opposite the first.

17. Control apparatus according to Claim 15 and one of Claims 1 to 14, **characterized in that**, to change over from the first menu (5) to the second menu (6), pixels arranged so as to be distributed over the screen (3) are progressively actuated in order to display the second menu (6).

18. Control apparatus according to one of the preceding claims, **characterized in that** operating elements (13, 14, 15, 16) for an air distribution system and/or for a heating installation and/or for a blower and/or for a vehicle lighting system are provided.

## Revendications

1. Dispositif de commande (1) pour un véhicule, comprenant une unité d'affichage (2) présentant un écran (3) et une unité d'entrée (4), dans lequel au moins deux menus, différents l'un de l'autre pouvant être pilotés chacun avec un élément d'entrée, peuvent être présentés sélectivement sur l'écran, et un élément de commande (7) est prévu pour commuter entre la présentation d'un premier menu (5) et la présentation d'un deuxième menu (6), **caractérisé en ce que** la commutation entre les menus (5, 6) ne s'effectue pas brusquement et **en ce que**, lors de la commutation des menus (5, 6), la présentation du premier menu (5) disparaît successivement et, inversement, la présentation du deuxième menu (6) apparaît proportionnellement, parallèlement et simultanément, de sorte que pendant l'apparition du deuxième menu (6), le premier menu (5) est encore visible en partie.

2. Dispositif de commande selon la revendication 1, **caractérisé en ce que** l'élément de commande (7) prévu pour la commutation des menus (5, 6) présente au moins deux touches (7, 8) ou une touche à bascule.

3. Dispositif de commande selon la revendication 1, **caractérisé en ce que** l'élément de commande (7) pour la commutation des menus (5, 6) est un bouton tournant.

4. Dispositif de commande selon la revendication 3, **caractérisé en ce que** le bouton tournant peut être actionné dans un premier sens de rotation et dans un deuxième sens de rotation qui est à l'opposé du premier.

5. Dispositif de commande selon une des revendications précédentes, **caractérisé en ce que** l'écran (3) est sensiblement rectangulaire et présente un rapport largeur/hauteur d'environ 16 : 9.

6. Dispositif de commande selon une des revendications précédentes, **caractérisé en ce que**, au moyen du dispositif de commande (1) on peut piloter un appareil radio et/ou un système de navigation et/ou un dispositif de télécommunication et/ou un système d'information du véhicule.

7. Dispositif de commande selon une des revendications précédentes, **caractérisé en ce que** l'écran (3) est un affichage à cristaux liquides.

8. Dispositif de commande selon une des revendications 1 à 6, **caractérisé en ce que** l'écran (3) présente un tube à rayons cathodique ou est un affichage fluorescent à vide.

9. Dispositif de commande selon une des revendications précédentes, **caractérisé en ce que** l'écran (3) présente deux régions partielles (10, 19) les menus (5, 6) pouvant être pilotés pouvant être présentés dans une région partielle (19) sélectivement et la valeur d'une grandeur variable et/ou un menu prédéterminé (20) pouvant être présentés dans l'autre région partielle (10).

10. Dispositif de commande selon une des revendications précédentes, **caractérisé en ce que** l'élément d'entrée (4) pour le pilotage des menus (5, 6) présente au moins deux touches ou est une touche à bascule.

11. Dispositif de commande selon une des revendications 1 à 9, **caractérisé en ce que** l'élément d'entrée (4) pour le pilotage des menus (5, 6) est un organe de réglage tournant ou un organe de réglage tournant et à pression (11).

12. Dispositif de commande selon la revendication 11, **caractérisé en ce que** l'organe de réglage tournant ou l'organe de réglage tournant et à pression (11) est un organe de réglage sensible.

13. Dispositif de commande selon une des revendications précédentes, **caractérisé en ce que** l'écran (3) présente un panneau tactile et **en ce que** le panneau tactile présente l'élément d'entrée (4) servant au pilotage des menus (5, 6) et/ou l'élément de commande (7) pour la commutation des menus (5, 6).

14. Dispositif de commande selon une des revendications précédentes, **caractérisé en ce que** la vitesse de la disparition successive du premier menu (5) et de l'apparition successive du deuxième menu (6) croît pendant la commutation.

15. Dispositif de commande selon une des revendications précédentes, **caractérisé en ce que** l'écran (3) présente une matrice de points image pouvant être présentés et **en ce que** chacun des points image peut être piloté individuellement.

16. Dispositif de commande selon une des revendications précédentes, **caractérisé en ce que** l'écran est à peu près rectangulaire et **en ce que**, lors de la commutation sur le dispositif menu (6), le premier menu (5) sort de l'écran au droit d'un premier petit côté (23) de l'écran (3) et le deuxième menu (6) pénètre dans l'écran en partant d'un deuxième petit côté (22) de l'écran (3) qui est à l'opposé du premier.

17. Dispositif de commande selon la revendication 15 et une des revendications 1 à 14, **caractérisé en ce que**, pour la commutation du premier menu (5) au deuxième menu (6), des points image successifs disposés répartis sur l'écran (3) sont pilotés pour la présentation du deuxième menu (6).

18. Dispositif de commande selon une des revendications précédentes, **caractérisé en ce qu'**il est prévu des éléments d'actionnement (13,14, 15, 16) pour une distribution de l'air et/ou pour une installation de chauffage et/ou pour un ventilateur et/ou pour un éclairage du véhicule.
